# EUROPÄISCHE PATENTSCHRIFT

(11) **EP 0 897 052 B1**
(45) Veröffentlichungstag und Bekanntmachung des Hinweises auf die Patenterteilung: **16.01.2002**
(21) Anmeldenummer: 98890229.2
(22) Anmeldetag: 06.08.1998
(51) Int. Cl.: F02B 1/04, F02B 23/10

(54) **Brennkraftmaschine mit Fremdzündung**
Spark ignition internal combustion engine
Moteur à combustion interne à allumage par étincelle

(30) Priorität: 11.08.1997 AT 50197 U
(43) Veröffentlichungstag der Anmeldung: 17.02.1999
(73) Patentinhaber: AVL List GmbH, 8020 Graz (AT)
(72) Erfinder: Piock, Walter, Dr., 8151 Hitzendorf (AT); Wirth, Martin, Dr. Dipl.-Ing., 8151 Hitzendorf (AT)
(74) Vertreter: Babeluk, Michael, Dipl.-Ing. Mag.

(56) Entgegenhaltungen:
- EP-A- 0 694 682
- EP-A- 0 778 402
- DE-A- 19 804 161

## Beschreibung

Die Erfindung betrifft eine Brennkraftmaschine mit Fremdzündung und zumindest einem hin- und hergehenden Kolben, mit einer im Bereich der Zylinderachse angeordneten Zündeinrichtung und mindestens einer Kraftstoffeinbringungseinrichtung pro Zylinder zur direkten Kraftstoffeinbringung in den durch eine dachförmige Brennraumdeckfläche eines Zylinderkopfes und der Kolbenoberfläche begrenzten Brennraum von einer radialen Position des Zylinders in Richtung der Zylindermitte, sowie mit mindestens einem in den Brennraum mündenden, eine Drallströmung im Brennraum erzeugenden Einlaßkanal, wobei der Kolben eine zumindest einen Teil des eingespritzten Kraftstoffes in Richtung zur Zündeinrichtung umlenkende Oberfläche mit einer asymmetrischen Kolbenmulde aufweist.

Ständig steigende Anforderungen an den Kraftstoffverbrauch und die Reduktion der Abgasemissionen, insbesondere der Kohlenwasserstoffe, erfordern den Einsatz neuer Technologien im Bereich der Verbrennungskraftmaschinen. Durch den heute üblichen Einsatz einer externen Gemischbildung bei Otto-Motoren, wie z.B. durch die Verwendung einer Saugrohreinspritzung oder eines Vergasers, strömt ein Teil des in den Brennraum und Zylinder eingesaugten Gemisches während der Ventilüberschneidungsphase, wenn Auslaß- und Einlaßventil gleichzeitig offen sind, in den Auspufftrakt der Brennkraftmaschine. Ein nicht unerheblicher Teil der meßbaren unverbrannten Kohlenwasserstoffe im Auspufftrakt stammt auch von Gemischteilen, die sich während der Verbrennung in Ringspalten oder wandnahen Bereichen, wo keine Verbrennung stattfindet, aufhalten. Zu diesen genannten Punkten kommt die notwendige Homogenisierung der Zylinderladung bei einem annähernd stöchiometrischen Mischungsverhältnis von Kraftstoff und Luft hinzu, welches eine sichere und aussetzerfreie Verbrennung sicherstellt. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 20 % geschätzt werden.

Um diese Nachteile zu verhindern bzw. zu vermindern, werden schon seit langem Versuche unternommen, fremdgezündete Verbrennungskraftmaschinen ungedrosselt zu betreiben und den Kraftstoff erst nach Beendigung der Luftansaugung wie bei einer selbstzündenden Brennkraftmaschine innerhalb des Brennraums und Zylinders einzubringen.

Aus SAE 780699 ist ein Verfahren bekannt, bei dem der Kraftstoff mittels einer Hochdruckeinspritzdüse direkt in den Brennraum der Verbrennungskraftmaschine eingespritzt wird. Die notwendige Zeit für die Aufbereitung des Gemisches begrenzt den zeitlichen Minimalabstand zwischen Einspritzzeitpunkt und Zündzeitpunkt. Es ist ein hohes Druckniveau für den Einspritzvorgang notwendig, um einerseits kurze Einspritzzeiten und andererseits eine gute Zerstäubung des Kraftstoffes mit entsprechend kleinem Tropfenspektrum zu erhalten. Die Aufbereitung und Dosierung des Kraftstoffes findet gleichzeitig statt. Um nur ein örtlich begrenztes Gebiet mit brennbarem Kraftstoff-Luftgemisch zu erhalten ist es andererseits notwendig, erst sehr spät im Motorzyklus den Kraftstoff einzubringen (ggf. erst während der Kompression kurz vor der Zündung), um die Zeit für die Ausbreitung und Verdünnung des Gemisches in der Brennraumluft zu begrenzen. Die Forderungen nach genügend früher Einspritzung für vollständige Kraftstoffverdampfung und möglichst später Einspritzung zur Aufrechterhaltung der Gemischschichtung stehen daher im Gegensatz zueinander. Es stellt sich somit die Aufgabe, aus der eingespritzten Kraftstoffmenge eine örtlich begrenzte Gemischwolke zu erzeugen, diese von der Mündung des Einspritzorgans in die Nähe der Zündeinrichtung zu transportieren und das Gemisch innerhalb der Wolke weiter mit Brennraumluft zu vermischen. Dabei sind folgende Punkte wesentlich :
- Die Gemischwolke muß insbesondere bei niedrigen Motorlasten deutlich abgegrenzt bleiben und sich aus thermodynamischen Gründen sowie zur Reduzierung der Emissionen unverbrannter Kohlenwasserstoffe möglichst in der Mitte des Brennraumes befinden.
- Die Vermischung des eingebrachten Kraftstoffes auf ein zündfähiges und vorzugsweise stöchiometrisches Luftverhältnis muß in der kurzen Zeitspanne zwischen Einblasezeitpunkt und Zündzeitpunkt erfolgen.

Ein wichtiges Problem eines solchen Brennverfahrens liegt in den zyklischen Schwankungen des Gemischbildungsvorganges, also der Änderung des Ablaufes von einem Motorzyklus zum nächsten aufgrund der Turbulenz der Strömungsvorgänge im Ansaugsystem und Zylinder der Brennkraftmaschine. Um diese Schwankungen so gering wie möglich zu halten, sollte im Zylinder eine Strömungsform erzeugt werden, die eine hohe Stabilität aufweist und insbesondere während der Kompressionsphase des Motorzyklusses erhalten bleibt und nicht in ungeordnete turbulente Strömungsbewegungen übergeht.

Diese Forderung wird am besten von einer Drallströmung erfüllt.

Unter einer Drallströmung versteht man die Rotationströmung im Zylinder, die in an sich bekannter Weise um eine im wesentlichen zur Zylinderachse parallelen Achse erfolgt, die durch die Einlaßkanalgestaltung und die Einmündung des oder der Einlaßkanäle in den Brennraum und Zylinder der Brennkraftmaschine verursacht wird. Während der Kompression erfolgt nur eine geringfügige Veränderung des Strömungsbildes, da der Durchmesser des Wirbels durch die Kolbenbewegung nicht verändert wird. Vor dem oberen Totpunkt ist somit eine stabile Rotationsbewegung der angesaugten Luft im Brennraum und Zylinder gegeben.

Die bereits angesprochenen zyklischen Schwankungen des Luftverhältnisses im Zündbereich sind stark abhängig vom Abstand der Einspritzdüse von der Zündeinrichtung und damit der Weglänge, die der Einspritzstrahl zur Zündeinrichtung zurücklegen muß.

Neben der Reduzierung der Schwankungen durch Erzeugung einer möglichst stabilen Strömungsform muß der Einspritzstrahl und die daraus entstehende Gemischwolke zusätzlich durch die Brennraumgeometrie geführt werden, was einen zumindestens teilweisen Wandauftrag des Kraftstoffes durch den Einspritzstrahl bedingt. Damit dieser Kraftstoffwandfilm nicht zu erhöhter Rußbildung und verschleppter Verbrennung führt, muß die Zylinderinnenströmung zu einer intensiven Verdampfung dieses Wandfilmes und dessen konvektivem Transport zum Zündbereich beitragen.

Gleichzeitig sollte die Brennraumoberfläche bezogen auf das Brennraumvolumen so klein wie möglich gehalten werden, um die Wandwärmeverluste insbesondere bei Homogenbetrieb zu begrenzen.

Aus der EP 0 694 682 A1 ist eine Brennkraftmaschine der eingangs genannten Art mit direkter Einspritzung bekannt, bei welcher durch die Ausformung der Einlaßkanäle eine Drallströmung im Zylinderraum erzeugt wird. Die Kolbenoberfläche weist eine ausgeprägte, eine Kolbenmulde umgebende Quetschfläche auf, wobei die Mulde derart exzentrisch angeordnet ist, daß die sich zentral im Brennraum befindliche Zündeinrichtung und das radial angeordnete Einspritzventil sich jeweils am Muldenrand befinden. Der Kraftstoff wird gezielt gegen den zu diesem Zweck ausgeformten Muldenboden gespritzt. Die Kolbenoberfläche hat hier also die Aufgabe, den Kraftstoffstrahl in erster Linie umzulenken. Der Drallströmung kommt die Aufgabe zu, den von der Muldenkante umgelenkten Kraftstoff zur Zündeinrichtung zu transportieren.

Aufgabe der Erfindung ist die Realisierung eines Brennverfahrens unter den dargestellten Randbedingungen unter Zugrundelegung einer einlaßgenerierten Drallströmung im Zylinderraum der Brennkraftmaschine. Es soll insbesondere ein stabiler Betrieb über einen weiten Bereich des Motorkennfeldes erzielt werden.

Erfindungsgemäß wird dies dadurch erreicht, daß die Kolbenmulde zum Kolbenrand hin auslaufend gestaltet ist und der Muldenrand der Kolbenmulde in Draufsicht im wesentlichen U-förmig gestaltet ist, daß der Muldenboden stetig ansteigend in die Muldenwand übergeht und daß die die Kolbenmulde umgebende Kolbenoberfläche im oberen Totpunkt des Kolbens zusammen mit der Brennraumdeckfläche einen, in Richtung der Drallströmung betrachtet, sich vergrößernden Quetschraum aufspannt. Dadurch wird die stabile Drallströmung genutzt, um den eingespritzten Kraftstoff unter Zuhilfenahme der Kolbengeometrie zur Zündeinrichtung zu transportieren und gleichzeitig die lokale Gemischaufbereitung zu verbessern. Die Kolbenmulde ist dabei kompakt ausgeführt und befindet sich annähernd in der Brennraummitte zur Führung des Einspritzstrahles und zur Kontrolle des geschichteten Kraftstoff-Luft-Gemisches. Die asymmetrische Ausformung des die Mulde umgebenden Kolbenrandes unterstützt die Einströmung einer schrägliegenden Drallströmung in den Muldenbereich. Die Kolbenoberfläche ist dabei derart gestaltet, daß das geringstmögliche Oberflächen-Volumen-Verhältnis erreicht wird. Durch den sich in Richtung der Drallströmung vergrößernden Quetschraum wird bei der Aufwärtsbewegung des Kolbens die Drallströmung unterstützt.

Die Drallströmung wird insbesondere dadurch in den Bereich der Kolbenmulde geführt, wenn die Kolbenoberfläche in Richtung der rotierenden Strömung aus drei verschiedenen, aneinander anschließenden Winkelsektoren besteht, wobei sich die Oberfläche im ersten Sektor im oberen Totpunkt der Kolbenbewegung bis auf einen Restabstand, vorzugsweise zwischen 1 und 5 mm, der Brennraumdeckfläche annähert, und im wesentlichen parallel zu dieser verläuft, und die Oberfläche im zweiten Sektor kontinuierlich bis auf eine von der Kolbenkante aufgespannte Ebene abfällt, und im dritten Sektor die Kolbenmulde zur Zylinderwand hin weitgehend offen ist. Im Detail ist dabei vorgesehen, daß der erste Winkelsektor, gemessen in Richtung der Drallströmung, um die Zylinderachse einen Winkelbereich von ca. 70° bis 120° einschließt, daß der zweite Winkelsektor einen Winkelbereich von etwa 130° bis 200° um die Zylinderachse einschließt und daß der dritte Winkelsektor einen Winkelbereich von etwa 60° bis 160° um die Zylinderachse einschließt. Bei der Aufwärtsbewegung des Kolbens wird somit durch die zum Teil als Quetschfläche ausgebildete Oberfläche des Kolbens ein zusätzlicher, zur Kolbenmulde führender Drall erzeugt, wodurch die durch die Lufteinlaßorgane der Brennkraftmaschine erzeugte Zylinderinnenströmung während der Kompressionsphase beschleunigt und über die vom Kraftstoffstrahl benützte Fläche zur Zündeinrichtung geleitet wird.

Vorzugsweise ist dabei vorgesehen, daß die Muldenwand im Bereich des ersten und zweiten Winkelsektors im Bereich der Oberkante mit einer Abweichung von maximal ±20° parallel zur Zylinderachse ausgebildet ist. Um die Mulde möglichst kompakt zu halten, ist es vorteilhaft, wenn in Zylinderrichtung gesehen der geringste Abstand zwischen Muldenoberkante und Zündeinrichtung maximal 0,3 mal dem Kolbendurchmesser D beträgt. Die Zündeinrichtung ist dabei vorzugsweise über der Kolbenmulde angeordnet.

In einer besonders bevorzugten Ausführungsvariante der Erfindung ist vorgesehen, daß die Mündung der Kraftstoffeinbringungseinrichtung in einem Abstand zwischen 0,3 bis 0,5 mal dem Kolbendurchmesser D von der Zylinderachse entfernt in der zylinderkopfseitigen Brennraumwand angeordnet ist, wobei die Mittellinie des Einspritzstrahles zur Zylinderachse bzw. zu einer zur Zylinderachse parallelen Geraden in einem Winkel von etwa 20° bis 70° geneigt ist und - im Grundriß betrachtet - etwa radial in den Brennraum gerichtet ist, wobei weiters vorgesehen ist, daß der Einspritzstahl in zumindest einer Kolbenstellung vollständig innerhalb der Kolbenmulde auf die Kolbenoberfläche auftrifft. Dies ermöglicht eine besonders gute Konzentration des von der beschleunigten Strömung transportierten Kraftstoffdampfes in einem Teilbereich des Brennraumvolumens.

Die Erfindung wird anhand der Figuren näher erläutert.

Es zeigen:
- Fig. 1: einen Querschnitt durch einen Zylinder einer erfindungsgemäßen Brennkraftmaschine gemäß der Linie I-I in Fig. 2,
- Fig. 2: einen Querschnitt durch diesen Zylinder gemäß der Linie II-II in Fig. 1,
- Fig. 3: eine Draufsicht auf den Zylinder aus Fig. 1 und 2,
- Fig. 4: eine andere Ausführung der Erfindung in einer Draufsicht auf den Zylinder,
- Fig. 5 und 6: weitere Ausführungsvarianten der Erfindung mit fünf Ventilen pro Zylinder,
- Fig. 7 und 8: weitere Ausführungsvarianten der Erfindung mit drei Ventilen pro Zylinder,
- Fig. 9: eine weitere Ausführungsvariante mit zwei Ventilen pro Zylinder in Draufsicht und
- Fig. 10: eine räumliche Darstellung der Kolbenoberfläche der erfindungsgemäßen Brennkraftmaschine.

Funktionsgleiche Teile sind in den Ausführungsbeispielen mit gleichen Bezugszeichen versehen.

In einem Zylinder 1 einer Brennkraftmaschine ist ein hin- und hergehender Kolben 2 längsverschieblich angeordnet. Durch die dachförmige Brennraumdeckfläche 3 des Zylinderkopfs 4 und die Kolbenoberfläche 5 des Kolbens 2 wird ein Brennraum 6 gebildet, in welchem ein oder mehrere Einlaßkanäle 7 und zumindest ein Auslaßkanal 8 über Einlaßventile 9 bzw. Auslaßventile 10 einmünden. Im Bereich der Zylinderachse 1a ist eine von einer Zündkerze gebildete Zündeinrichtung 11 angeordnet. Eine Kraftstoffeinspritzeinrichtung 12 mündet über die Brennraumdeckfläche 3 in den Brennraum, wobei sich die Mündung 15 im Bereich der Zylinderwand 1c befindet.

Die Achse 11a des Kraftstoffeinspritzstrahles weist dabei zu einer zur Zylinderachse 1a parallelen Geraden 1b einen Winkel α von 20° bis 70° auf. Die Mündung 15 der Kraftstoffeinspritzeinrichtung 11 befindet sich in einem Abstand a zwischen 0,3 und 0,5 mal dem Kolbendurchmesser D von der Zylinderachse 1a entfernt.

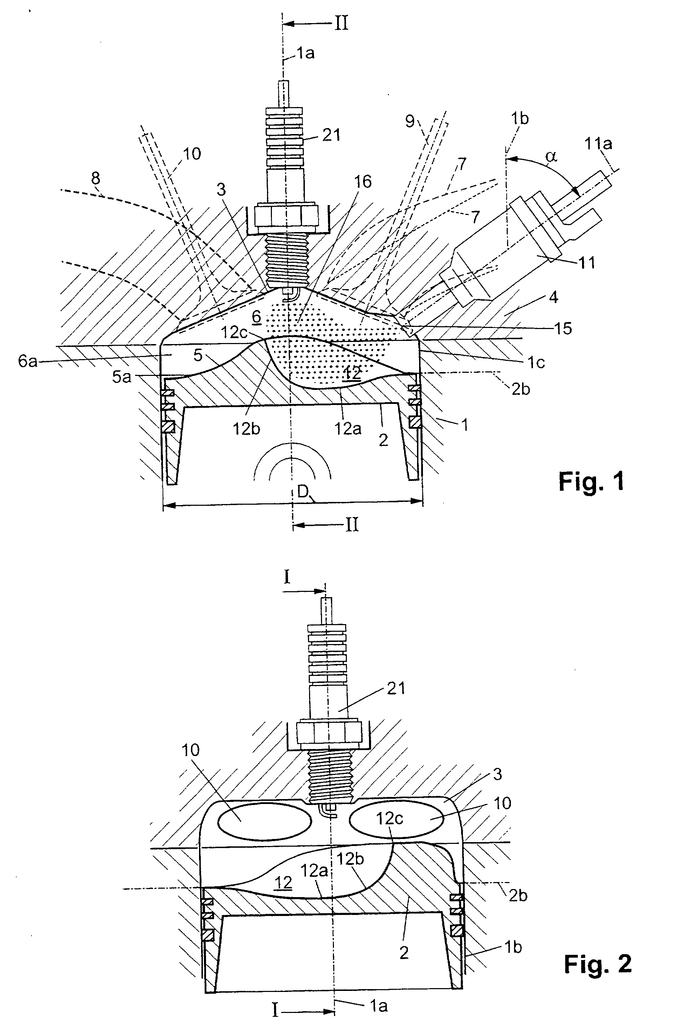

Ein Teil der Kolbenoberfläche 5 ist als eine zur Kolbenkante 2a hin auslaufende Kolbenmulde 12 ausgebildet. Der Boden 12a der Kolbenmulde 12 geht dabei kontinuierlich in die Muldenwand 12b über, welche im Bereich der Oberkante 12c der Mulde 12 etwa in Richtung der Zylinderachse 1a ausgebildet ist. Die Kraftstoffeinspritzeinrichtung 11 ist dabei in die Kolbenmulde 12 gerichtet, so daß durch die Mischung des eingespritzten Kraftstoffes mit der in den Brennraum als Drallströmung 13 eintretenden Luft eine Gemischwolke 16 entsteht, welche durch die Muldenform in Richtung der Zündquelle 11 geführt wird, wie in Fig. 1 schematisch angedeutet ist.

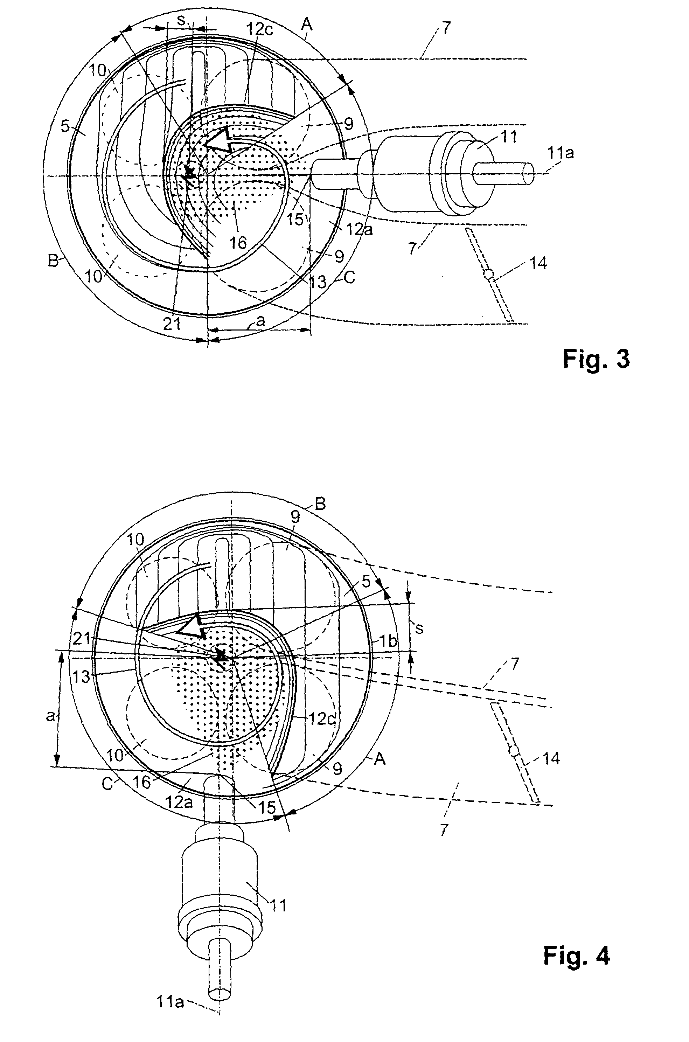

Die die Kolbenmulde 12 umgebende Kolbenoberfläche 5a besteht in Richtung der eintretenden Drallströmung 13 betrachtet, aus drei verschiedenen, aneinander anschließenden Winkelsektoren A, B und C, wie den Fig. 3 bis 9 zu entnehmen ist. Der erste Sektor A spannt sich-beginnend im Bereich, in dem die Oberkante 12c der Kolbenmulde 12 in den Kolbenboden 12a ausläuft - über einen Winkelbereich von etwa 70° bis 120°. Die Oberfläche 5 des Kolbens 2 verläuft im ersten Sektor etwa parallel zur Brennraumdeckfläche 3 und nähert sich im oberen Totpunkt des Kolbens 2 bis auf einen Restabstand zwischen 1 und 5 mm der Brennraumdeckfläche 3 an. Der zweite Sektor B erstreckt sich auf einen Winkelbereich von etwa 130° bis 200° und weist die Besonderheit auf, daß die eine Quetschfläche bildende Oberfläche 5a des Kolbens 2 sich kontinuierlich bis auf die von der Kolbenkante 2a aufgespannten Ebene 2b absenkt. Im dritten Sektor C, welcher sich über einen Winkelbereich von etwa 60 bis 150° um die Zylinderachse 1a erstreckt, ist die Kolbenmulde 12 zur Zylinderwand 1b hin weitgehend offen. Die Mittelachse 11a des Einspritzstrahles liegt, in Zylinderachsrichtung gesehen, innerhalb dieses dritten Sektors C.

Die Gestaltung der Oberfläche des Kolbens 2 in den Sektoren A, B und C bewirkt, daß die einlaßgenerierte Drallströmung, welche in den Fig. 3 bis 10 mit dem Bezugszeichen 13 angedeutet ist, während des Kompressionsvorganges beschleunigt und über die vom Kraftstoffstrahl benetzte Fläche der Kolbenmulde 12 zur Zündeinrichtung 11 geleitet wird. Gleichzeitig wird erreicht, daß der von der beschleunigten Strömung 13 transportierte Kraftstoff sich in einem Teilbereich des Brennraumes 6 konzentriert.

Die Brennraummulde 12 und die Zündeinrichtung 11 sind dabei vorteilhafterweise so angeordnet, daß in Zylinderrichtung gesehen, der geringste Abstand s zwischen der Oberkante 12c der Mulde 12 und der Zündeinrichtung 11 maximal 0,3 mal dem Kolbendurchmesser D beträgt. Die Zündeinrichtung 11 befindet sich dabei bevorzugt oberhalb der Mulde 12.

Die Fig. 3 und 4 zeigen Ausführungsvarianten mit zwei Einlaßventilen 9 und zwei Auslaßventilen 10, wobei zu jedem Einlaßventil 9 ein Einlaßkanal 7 führt. Dabei kann in zumindest einem Einlaßkanal 7 ein Kanalabsperrorgan 14 angeordnet sein. Die Kraftstoffeinspritzeinrichtung 11 ist dabei entweder zwischen den beiden Einlaßkanälen 7 (Fig. 3) oder im Bereich zwischen einem Einlaßventil 9 und einem Auslaßventil 10 angeordnet (Fig. 4).

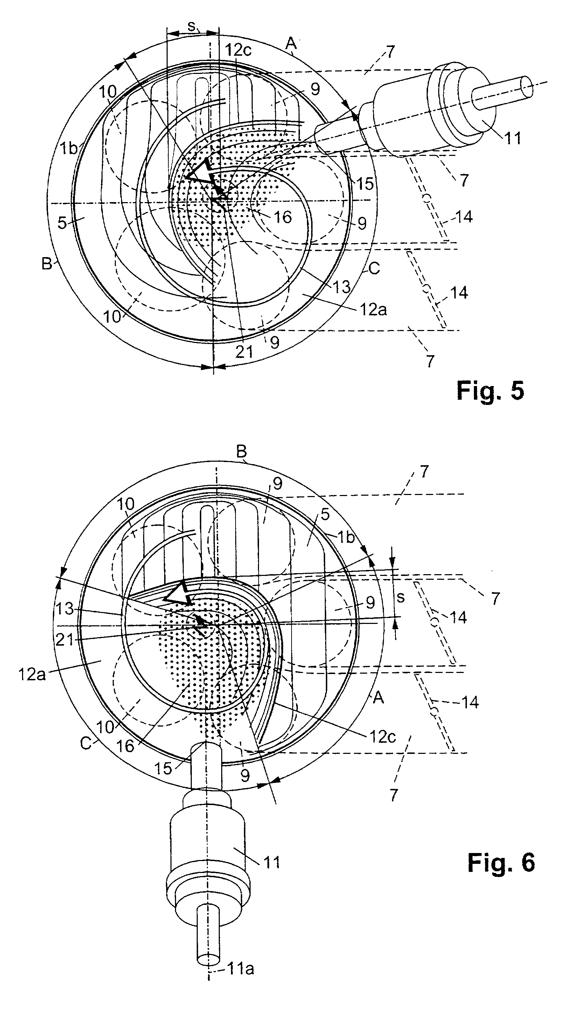

Die Fig. 5 und 6 zeigen erfindungsgemäße Ausführungsvarianten mit fünf Ventilen, nämlich drei Einlaßventilen 9 und zwei Auslaßventilen 10 pro Zylinder. Dabei können zwei der drei zu den Einlaßventilen 9 führenden Einlaßkanäle 7 eine Kanalabschalteinrichtung 14 aufweisen, um die gewünschte Drallströmung 13 zu erzeugen. Die Einspritzung des Kraftstoffes kann dabei über die Kraftstoffeinspritzeinrichtung 11 zwischen zwei Einlaßventilen 9 (Fig. 5) oder zwischen einem Einlaßventil 9 oder einem Auslaßventil 10 (Fig. 6) erfolgen.

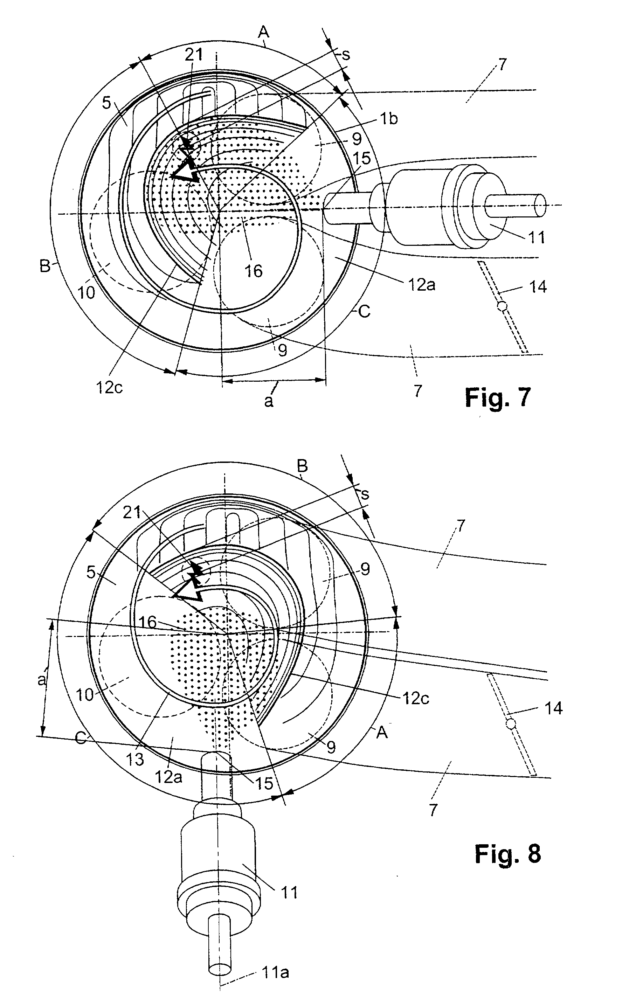

Die Fig. 7 und 8 zeigen Ausführungsvarianten für Brennkraftmaschinen mit drei Ventilen, nämlich zwei Einlaßventilen 9 und einem Auslaßventil 10 pro Zylinder 1. Einer der beiden zu den Einlaßventilen 9 führenden Einlaßkanäle 7 ist zur Erzeugung der nötigen Drallströmung 13 mit einer Kanalabschalteinrichtung 14 ausgestattet. Die Kraftstoffeinspritzung kann über die - analog zu den beschriebenen Ausführungsvarianten - zwischen zwei Einlaßventilen 9 (Fig. 7) oder aber zwischen einem Einlaßventil 9 und dem Auslaßventil 10 (Fig. 8) angeordnete Kraftstoffeinrichtung 11 erfolgen.

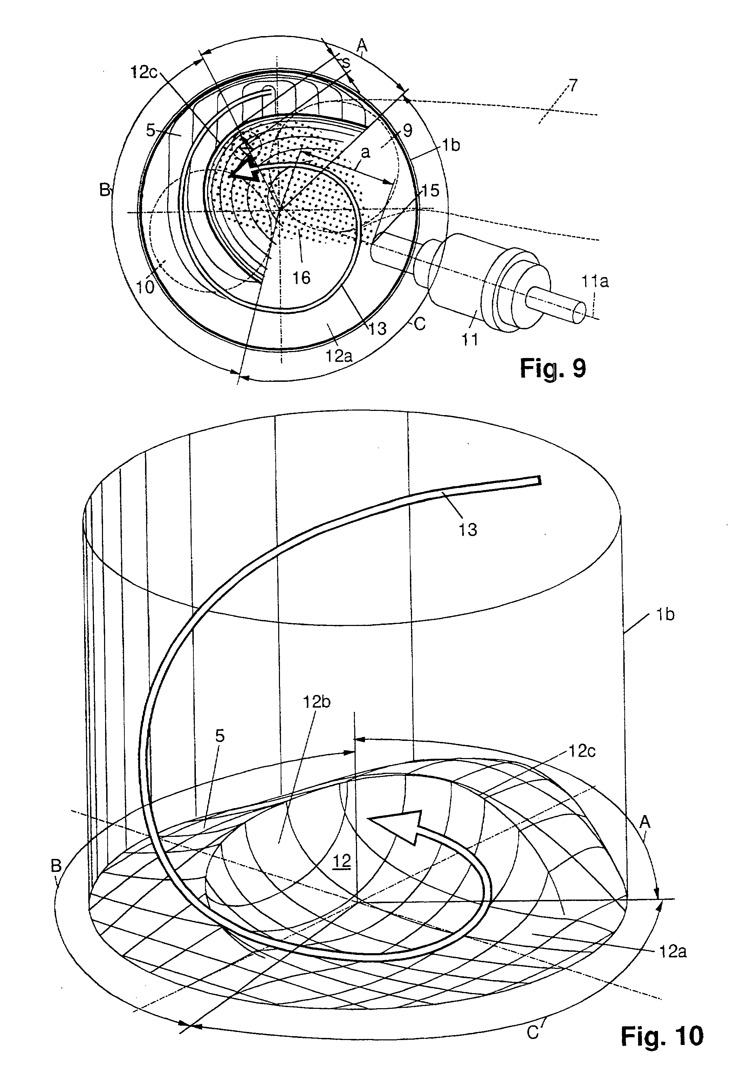

Fig. 9 zeigt eine einfache Ausführungsvariante für Brennkraftmaschinen mit einem Einlaßventil 9 und einem Auslaßventil 10 pro Zylinder 1. Auch hier ist der Einlaßkanal 7 drallerzeugend ausgebildet, so daß während der Zylinderfüllung und während des Kompressionsvorganges eine ausgeprägte, durch die erfindungsgemäße Kolbenform unterstützte Drallströmung 13 entsteht.

Fig. 10 zeigt eine räumliche Ansicht der erfindungsgemäß ausgeführten Kolbenoberfläche 5 des Kolbens 2. Während des Kompressionsvorganges wird die Drallströmung 13 im Winkelsektor B beschleunigt und im Winkelsektor C über den mit Kraftstoff benetzten Kolbenboden 12a geführt. Der auf dem Kolben 2 auftreffende Teil des eingespritzten Kraftstoffes wird dabei in Richtung zur Zündeinrichtung 21 umgelenkt und gleichzeitig der von der beschleunigten Strömung 13 transportierte Kraftstoff dann in einem Teilbereich des Brennraumes 6 konzentriert.

## Patentansprüche

1. Brennkraftmaschine mit Fremdzündung und zumindest einem hin- und hergehenden Kolben (2), mit einer in einer durch einen Zylinderkopf (4) gebildeten dachförmigen Brennraumdeckfläche (3) angeordneten Zündeinrichtung (21) und mindestens einer Kraftstoffeinbringungseinrichtung (11) pro Zylinder (1) zur direkten Kraftstoffeinbringung in den durch die Brennraumdeckfläche (3) und der Kolbenoberfläche (5) begrenzten Brennraum (6) von einer radialen Position des Zylinders in Richtung der Zylindermitte, sowie mit mindestens einem in den Brennraum (6) mündenden, eine Drallströmung (13) im Brennraum (6) erzeugenden Einlaßkanal (7), wobei der Kolben (2) eine zumindest einen Teil des eingespritzten Kraftstoffes in Richtung zur Zündeinrichtung (21) umlenkende Oberfläche (5) mit einer asymmetrischen Kolbenmulde (12) aufweist, **dadurch gekennzeichnet, daß** die Kolbenmulde (12) zum Kolbenrand (2a) hin auslaufend gestaltet ist und der Muldenrand (12c) der Kolbenmulde (12) in Draufsicht im wesentlichen U-förmig gestaltet ist, daß der Muldenboden (12a) stetig ansteigend in die Muldenwand (12b) übergeht und daß die die Kolbenmulde (12) umgebende Kolbenoberfläche (5a) im oberen Totpunkt des Kolbens (2) zusammen mit der Brennraumdeckfläche (3) einen, in Richtung der Drallströmung betrachtet, sich vergrößemden Quetschraum (6a) aufspannt.

2. Brennkraftmaschine nach Anspruch 1, **dadurch gekennzeichnet, daß** die Kolbenoberfläche (5) in Richtung der rotierenden Strömung aus drei verschiedenen, aneinander anschließenden Winkelsektoren (A, B, C) besteht, wobei sich die Oberfläche (5) im ersten Sektor (A) im oberen Totpunkt der Kolbenbewegung bis auf einen Restabstand, vorzugsweise zwischen 1 und 5 mm, der Brennraumdeckfläche (3) annähert, und im wesentlichen parallel zu dieser verläuft, und die Oberfläche (5) im zweiten Sektor (B) kontinuierlich bis auf eine von der Kolbenkante (2a) aufgespannte Ebene (2b) abfällt, und im dritten Sektor (C) die Kolbenmulde (12) zur Zylinderwand (1b) hin weitgehend offen ist.

3. Brennkraftmaschine nach Anspruch 1 oder 2, **dadurch gekennzeichnet, daß** der erste Winkelsektor (A), gemessen in Richtung der Drallströmung (13), um die Zylinderachse (1a) einen Winkelbereich von ca. 70° bis 120° einschließt.

4. Brennkraftmaschine nach Anspruch 2 oder 3, **dadurch gekennzeichnet, daß** der zweite Winkelsektor (B) einen Winkelbereich von etwa 130° bis 200° um die Zylinderachse (1a) einschließt.

5. Brennkraftmaschine nach einem der Ansprüche 2 bis 4, **dadurch gekennzeichnet, daß** der dritte Winkelsektor (C) einen Winkelbereich von etwa 60° bis 160° um die Zylinderachse (1a) einschließt.

6. Brennkraftmaschine nach einem der Ansprüche 2 bis 5, **dadurch gekennzeichnet, daß** die Mittelachse (11a) des Einspritzstrahles der Kraftstoffeinbringungseinrichtung (11) in der oberen Totpunktlage des Kolbens (2) die Kolbenoberfläche (5) im Bereich der Kolbenmulde (12), vorzugsweise innerhalb des dritten Sektors (C), schneidet.

7. Brennkraftmaschine nach einem der Ansprüche 1 bis 6, **dadurch gekennzeichnet, daß** die Muldenwand (12b) im Bereich des ersten und zweiten Winkelsektors (A, B) im Bereich der Muldenoberkante (12c) mit einer Abweichung von maximal ±20° parallel zur Zylinderachse (1a) ausgebildet ist.

8. Brennkraftmaschine nach einem der Ansprüche 1 bis 7, **dadurch gekennzeichnet, daß** in Zylinderrichtung gesehen, der geringste Abstand (s) zwischen Muldenoberkante (12c) und Zündeinrichtung (21) maximal 0,3 mal dem Kolbendurchmesser (D) beträgt.

9. Brennkraftmaschine nach einem der Ansprüche 1 bis 8, **dadurch gekennzeichnet, daß** die Mündung (15) der Kraftstoffeinbringungseinrichtung (11) in einem Abstand (a) zwischen 0,3 bis 0,5 mal dem Kolbendurchmesser (D) von der Zylinderachse (1a) entfernt in der zylinderkopfseitigen Brennraumwand angeordnet ist, wobei die Mittellinie (11a) des Einspritzstrahles zur Zylinderachse (1a) bzw. zu einer zur Zylinderachse (1a) parallelen Geraden (1b) in einem Winkel (α) von etwa 20° bis 70° geneigt ist und - im Grundriß betrachtet - etwa radial in den Brennraum (6) gerichtet ist.

10. Brennkraftmaschine nach einem der Ansprüche 1 bis 9, **dadurch gekennzeichnet, daß** der Einspritzstahl in zumindest einer Kolbenstellung vollständig innerhalb der Kolbenmulde (12) auf die Kolbenoberfläche (5) auftrifft.

11. Brennkraftmaschine nach einem der Ansprüche 1 bis 10, **dadurch gekennzeichnet, daß** die Zündeinrichtung (21) über der Kolbenmulde (12) angeordnet ist.

## Claims

1. An internal combustion engine with spark ignition and at least one reciprocating piston (2), with an ignition device (21) arranged in a roof-like combustion chamber cover surface (3) formed by a cylinder head (4) and at least one fuel introduction device (11) per cylinder (1) for direct fuel introduction into the combustion chamber (6), which is limited by a roof-shaped combustion chamber cover surface (3) and the piston surface (5), from a radial position of the cylinder in the direction of the centre of the cylinder, and with at least one inlet conduit (7) opening into the combustion chamber (6) and producing a swirling flow (13) in the combustion chamber (6), with the piston (2) comprising a surface (5) with an asymmetrical piston depression (12) deflecting at least a portion of the injected fuel in the direction towards the ignition device (21), **characterized in that** the piston depression (12) is provided with an arrangement tapering towards the edge (12c) of the piston and the edge (12c) of the piston depression (12) is provided substantially with a U-shape as seen in the top view, that the depression floor (12a) changes in a continuously rising manner into the depression wall (12b) and that the piston surface (5a) encompassing the piston depression (12) forms, as seen in the direction of the swirling flow, an expanding squeezing chamber (6a) at the top dead center of the piston (2) in conjunction with the combustion chamber cover surface (3).

2. An internal combustion engine as claimed in claim 1, **characterized in that** the piston surface (5) consists in the direction of the rotating flow of three different, mutually successive angular sectors (A, B, C), with the surface (5) in the first sector (A) approaching in the top dead center of the piston movement the combustion chamber cover surface up to a residual distance, which is preferably between 1 and 5 mm, and extending substantially parallel to the same, and the surface (5) in the second sector (B) dropping continuously up to a plane (2b) formed by the piston edge (2a) and the piston depression (12) being substantially open towards the cylinder wall (1b) in the third sector (C).

3. An internal combustion engine as claimed in claim 1 or 2, **characterized in that** the first angular sector (A), as measured in the direction of the swirling flow (13), encloses an angular range of approx. 70° to 120° about the cylinder axis (1a).

4. An internal combustion engine as claimed in claim 2 or 3, **characterized in that** the second angular sector (B) encloses an angular range of approx. 130° to 200° about the cylinder axis (1a).

5. An internal combustion engine as claimed in one of the claims 2 to 4, **characterized in that** the third angular sector (C) encloses an angular range of approx. 60° to 160° about the cylinder axis (1a).

6. An internal combustion engine as claimed in one of the claims 2 to 5, **characterized in that** the central axis (11a) of the injection jet of the fuel introduction device (11) intersects in the top dead center of the piston (2) the piston surface (5) in the region of the piston depression (12), preferably within the third sector (C).

7. An internal combustion engine as claimed in one of the claims 1 to 6, **characterized in that** the depression wall (12b) in the zone of the first and second angular sector (A, B) is arranged in the zone of the upper edge (12c) with a deviation of a maximum of ±20° parallel to the cylinder axis (1a).

8. An internal combustion engine as claimed in one of the claims 1 to 7, **characterized in that**, as seen in the direction of the cylinder, the smallest distance (s) between the upper edge of the depression (12c) and the ignition device (21) is a maximum of 0.3 times the piston diameter (D).

9. An internal combustion engine as claimed in one of the claims 1 to 8, **characterized in that** the orifice (15) of the fuel introduction device (11) is arranged in the combustion chamber wall on the cylinder head side at a distance (a) from the cylinder axis (1a) of between 0.3 to 0.5 times the piston diameter (D), with the central line (11a) of the injection jet to the cylinder axis (1a) or a straight line (1b) parallel to the cylinder axis (1a) being inclined at an angle (α) of approx. 20° to 70° and, as seen in horizontal projection, being directed approximately radially into the combustion chamber (6).

10. An internal combustion engine as claimed in one of the claims 1 to 9, **characterized in that** the injection jet impinges completely on the piston surface (5) within the piston depression (12) in at least one piston position.

11. An internal combustion engine as claimed in one of the claims 1 to 10, **characterized in that** the ignition device (21) is arranged above the piston depression (12).

## Revendications

1. Moteur à combustion interne à allumage commandé et ayant au moins un piston (2) à mouvement alternatif, comprenant une installation d'allumage (21) prévue dans la surface du sommet (3) en forme de toit de la chambre de combustion dans une culasse (4), et au moins une installation d'alimentation en carburant (11) par cylindre (1) pour introduire à partir d'une position radiale du cylindre en direction du milieu du cylindre directement du carburant dans la chambre de combustion (6) délimitée par la surface du sommet de la chambre de combustion (3) et la surface supérieure du piston (5), ainsi qu'au moins un canal d'admission (7) débouchant dans la chambre de combustion (6), pour y créer un écoulement tourbillonaire (13), le piston (2) ayant une surface supérieure (5) déviant au moins une partie du carburant injecté en direction de l'installation d'allumage (21) avec une cavité de piston (12) asymétrique,
**caractérisé en ce que**
la cavité de piston (12) rejoint l'arête (2a) du piston et le bord (12c) de la cavité (12) du piston présente en vue de dessus au moins une forme essentiellement en U et le fond (12a) de la cavité remonte en continu pour rejoindre la paroi (12b) de la cavité, et
la surface supérieure (5a) du piston entourant la cavité (12) forme au niveau du point mort haut du piston (2) avec la surface supérieure de la chambre de combustion (3), une chambre d'écrasement (6a) qui s'agrandit en direction de l'écoulement tourbillonnaire.

2. Moteur à combustion interne selon la revendication 1,
**caractérisé en ce que**
la surface supérieure (5) du piston se compose, en direction de l'écoulement tourbillonnaire, de trois secteurs d'angle (A, B, C) adjacents,
la surface supérieure (5) dans le premier secteur (A), pour le point mort haut du mouvement du piston, arrivant à une distance résiduelle, de préférence comprise entre 1 et 5 mm par rapport à la surface supérieure de la chambre de combustion (3) en étant essentiellement parallèle à celle-ci, et la surface (5) dans le second secteur (B) descend en continu jusqu'au plan (2b) sous-tendu par l'arête (2a) du piston et dans le troisième secteur (C), la cavité (12) du piston est très largement ouverte vers la paroi (1b) du cylindre.

3. Moteur à combustion interne selon l'une quelconque des revendications 1 ou 2,
**caractérisé en ce que**
le premier secteur angulaire (A), mesuré dans la direction de l'écoulement tourbillonnaire (13), englobe autour de l'axe (1a) du cylindre une plage angulaire comprise entre environ 70° et 120°.

4. Moteur à combustion interne selon l'une quelconque des revendications 2 ou 3,
**caractérisé en ce que**
le second secteur angulaire (B) englobe une plage angulaire comprise entre environ 130° et 200° autour de l'axe (1a) du cylindre.

5. Moteur à combustion interne selon l'une quelconque des revendications 2 à 4,
**caractérisé en ce que**
le troisième secteur angulaire (C) englobe une plage angulaire comprise entre environ 60° et 160° autour de l'axe (1a) du cylindre.

6. Moteur à combustion interne selon l'une quelconque des revendications 2 à 5,
**caractérisé en ce que**
l'axe (11a) du jet d'injection de l'installation d'alimentation en carburant (11) coupe, en position de point mort haut du piston (2), la surface supérieure (5) du piston au niveau de la cavité (12) du piston, de préférence dans le troisième secteur (C).

7. Moteur à combustion interne selon l'une quelconque des revendications 1 à 6,
**caractérisé en ce que**
la paroi (12b) de la cavité dans la zone du premier et du second secteur angulaire (A, B), est réalisée au niveau du bord supérieur (12c) de la cavité avec une déviation maximale de ±20° parallèlement à l'axe (1a) du cylindre.

8. Moteur à combustion interne selon l'une quelconque des revendications 1 à 7,
**caractérisé en ce que**
vu dans la direction du cylindre, la plus petite distance (s) entre l'arête supérieure (12c) de la cavité et l'installation d'allumage (21) est au plus égale à 0,3 fois le diamètre (D) du piston.

9. Moteur à combustion interne selon l'une quelconque des revendications 1 à 8,
**caractérisé en ce que**
l'embouchure (15) de l'installation d'introduction de carburant (11) se trouve à une distance (a) comprise entre 0,3 et 0,5 fois le diamètre (D) du piston par rapport à l'axe (1a) du cylindre dans la paroi de la chambre de combustion du côté de la culasse et l'axe (11a) du jet d'injection fait par rapport à l'axe (1a) du cylindre ou par rapport à une droite (1b) parallèle à l'axe (1a) du cylindre, un angle d'inclinaison (α) compris entre 20° et 70° et, (vu en plan) cet axe est dirigé sensiblement radialement par rapport à la chambre de combustion (6).

10. Moteur à combustion interne selon l'une quelconque des revendications 1 à 9,
**caractérisé en ce que**
le jet d'injection arrive au moins dans une position du piston, complètement à l'intérieur de la cavité (12) du piston sur la surface supérieure (5) de celui-ci.

11. Moteur à combustion interne selon l'une quelconque des revendications 1 à 10,
**caractérisé en ce que**
l'installation d'allumage (21) se trouve au-dessus de la cavité (12) du piston.
